# EUROPÄISCHE PATENTANMELDUNG

(11) **EP 1 793 138 A2**
(43) Veröffentlichungstag der Anmeldung: **06.06.2007**
(21) Anmeldenummer: 06023508.2
(22) Anmeldetag: 13.11.2006
(51) Int. Cl.: F16D 48/02

(54) **Drosseleinrichtung in hydraulischer Strecke zur Kupplungsbetätigung**

(30) Priorität: 30.11.2005 DE 102005057432
(71) Anmelder: LuK Lamellen und Kupplungsbau Beteiligungs KG, 77815 Bühl (DE)
(72) Erfinder: Hahn, Henry, 22525 Hamburg (DE)

(57) **Zusammenfassung**

Die Erfindung eine Drosseleinrichtung zur richtungsabhängigen Beeinflussung der Strömungsgeschwindigkeit eines Fluids in einer hydraulische Strecke bei der Betätigung einer Fahrzeugkupplung. Um mit geringem technischen Aufwand sowohl Drehmomentspitzen bzw. extrem schnelle Rückhubbewegungen des Pedals zu vermeiden, und dabei gleichzeitig die Einkuppelgeschwindigkeit zu begrenzen, wird ein herkömmlicher PTL so gestaltet, um das Leckage-Volumen in der hydraulische Strecke zu verkleinern, dass der als Schalter fungierende Ventilkörper quer zur Strömungsrichtung eine Durchgangsbohrung aufweist, die abhängig vom Schaltvorgang, mit einer Blende im Durchlass des Zulaufes zur Geberzylindereinheit verbunden werden kann.

## Beschreibung

Die vorliegende Erfindung betrifft eine Drosseleinrichtung zur richtungsabhängigen Beeinflussung der Strömungsgeschwindigkeit des Fluids in einer hydraulischen Strecke bei der Betätigung einer Kupplung eines Fahrzeuges, wobei die hydraulische Strecke zumindest einen Nehmerzylinder und einen Geberzylinder umfasst, die über eine mit einem Fluid durchströmte Leitung miteinander verbunden sind.

Hydraulische Betätigungssysteme mit einer beispielsweise von einem Pedal her mit einem Fuß bedienten Geberzylindereinheit sollen eine sichere und komfortable Betätigung der Kupplung über die in der hydraulische Strecke geforderten Bauelemente ermöglichen.

Aus dem Stand der Technik ist die DE103 32 370A1 für eine Betätigungseinrichtung bekannt, die mit geringem technischem Aufwand, sowohl Drehmomentspitzen bzw. extreme schnelle Rückhubbewegungen des Pedals vermeidet und dabei gleichzeitig die Einkuppelgeschwindigkeit begrenzt. Die auftretenden Drehmomentspitzen werden dadurch begrenzt, indem der Strömungswiderstand zwischen Geberzylinder und Nehmerzylinder mit Hilfe eines Ventilgliedes veränderbar gestalte wird.

Weiterhin ist aus der WO 2004/010017 ein hydraulisches Betätigungssystem für Fahrzeugkupplungen bekannt, das eine wohl dosierte Betätigung dieser ermöglicht, indem in die hydraulische Strecke zwischen Geber- und Nehmerzylinder ein Drosselventil angeordnet ist, mittels dessen der Strömungswiderstand zwischen den beiden Zylindern veränderbar ist.

Die Aufgabe der Erfindung besteht darin, unter Verwendung herkömmlicher PTL (Peak Tork Limiter) wie in der WO 2004/010017 angegeben, dessen Blendenkörper so zu gestalten, dass das Leckage-Volumen in der hydraulischen Strecke verkleinert wird.

Die Aufgabe der Erfindung wird mit einer Drosseleinrichtung mit den Merkmalen des Anspruchs 1 gelöst, indem der Ventilkörper einer Drosseleinrichtung, der eine Durchgangsbohrung aufweist und zwischen 2 Anschlägen längs verschiebbar in einer Bohrung des Ablaufs zur Nehmerzylindereinheit angeordnet ist, die etwa rechtwinklig zu einer Bohrung des Zulaufs zur Geberzylindereinheit verläuft, quer zur Strömungsrichtung eine Durchgangsbohrung aufweist, die abhängig vom Schaltvorgang mit einer Blende im Durchlass des Zulaufes zur Geberzylindereinheit verbunden werden kann.

Eine vorteilhafte Ausgestaltung der Erfindung sieht vor, dass die Enden der Durchgangsbohrung des Ventilkörpers von einer umlaufenden Nut begrenzt werden. Diese Nut dient einerseits dazu, vorhandenes Leckage-Volumen von Fluid aus der Bohrung des Ablaufs zur Nehmerzylindereinheit in die Durchgangsbohrung einzuleiten und andererseits zur Gewährleistung einer Überdeckung bzw. zur besseren Überdeckung der Öffnungen von Durchgangsbohrung und Blende, wenn der Ventilkörper, dessen Bewegung durch zwei Anschläge in der Bohrung des Ablaufs zur Nehmerzylindereinheit begrenzt wird, während des Einkuppelvorgangs an einem dieser Anschläge, nämlich am Stopfen anschlägt, der die Bohrung des Ablaufs zur Nehmerzylindereinheit endseitig verschließt.

In vorteilhafter Weise ist die Zulaufbohrung zur Geberzylindereinheit im Bereich zur Bohrung des Ablaufs zur Nehmerzylindereinheit in zwei Durchlässe mit unterschiedlichen Durchmessern unterteilt. Auf diese Weise wird in diesem Bereich die Strömungsgeschwindigkeit des Fluids unterschiedlich gedrosselt und gleichzeitig dem Ventilkörper zwei Schaltstellungen mit unterschiedlich großen Durchlässen/Durchflussöffnungen gegenüber gestellt.

Zur Erzielung eines besseren Strömungsverhaltens ist die Blende in Richtung Geberzylindereinheit so ausgebildet, dass sich deren Durchmesser erweitert.

Die Erfindung soll nachfolgend anhand eines Ausführungsbeispiels näher erläutert werden. Es zeigen:
- Figur 1: Eine schematische Darstellung einer hydraulische Strecke zur Betätigung einer Fahrzeugkupplung
- Figur 2a 2b: Eine Schnittdarstellung einer in die hydraulische Strecke eingebrachten Druckbegrenzungseinrichtung in zwei unterschiedlichen Stellungen des Ventilkörpers

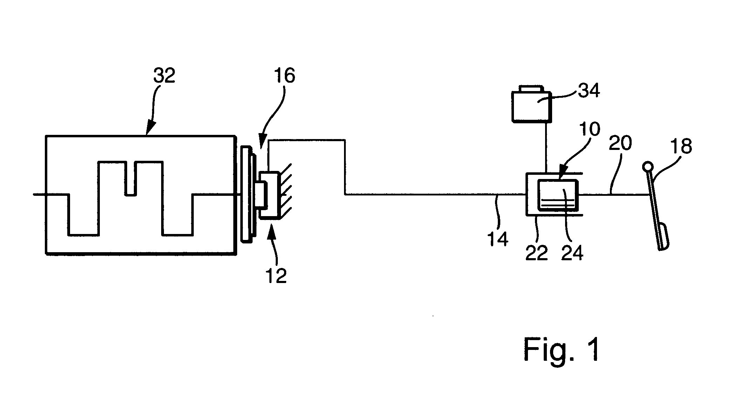

Gemäß Figur 1 enthält ein hydraulisches Betätigungssystem für eine Kupplung eine Geberzylindereinheit 10, die mit einer Nehmerzylindereinheit 12 über eine Hydraulikleitung 14 verbunden ist. Eine Kupplung 16 wird hydraulisch zur Beaufschlagung der Geberzylindereinheit 10 mittels eines Betätigungsgliedes 18 betätigt, dass ein Fußpedal, ein Aktor beispielsweise ein elektrischer Aktor oder dergleichen sein kann. Infolge der Betätigung dieses Betätigungsgliedes 18 wird über eine Kolbenstange 20 ein im Gehäuse 22 der Geberzylindereinheit 10 beweglicher Kolben gemäß Figur 1 nach links verschoben, sodass zwischen dem Gehäuse 22 des Zylinders und des Kolbens 24 Druck aufgebaut wird, der über die Hydraulikleitung 14 durch eine Drosseleinrichtung 42 hindurch der Nehmerzylindereinheit 12 zugeführt wird. Die Nehmerzylindereinheit 12 ist, wie dargestellt, in vorteilhafter Weise konzentrisch zu einer Getriebeeingangswelle angeordnet und stützt sich axial an einem nicht dargestellten Getriebegehäuse ab, um die nötige Ausrückkraft über ein Ausrücklager der Kupplung 16 bzw. an deren Ausrückelementen wie Tellerfeder, usw. in an sich bekannter Weise aufzubringen.

Die Getriebeeingangswelle überträgt bei geschlossener, konzentrisch zu einer Kurbelwelle einer Brennkraftmaschine 32 angeordneter Kupplung das Drehmoment dieser Brennkraftmaschine 32 auf ein nicht dargestelltes Getriebe und von dort auf die Antriebsräder eines Kraftfahrzeugs.

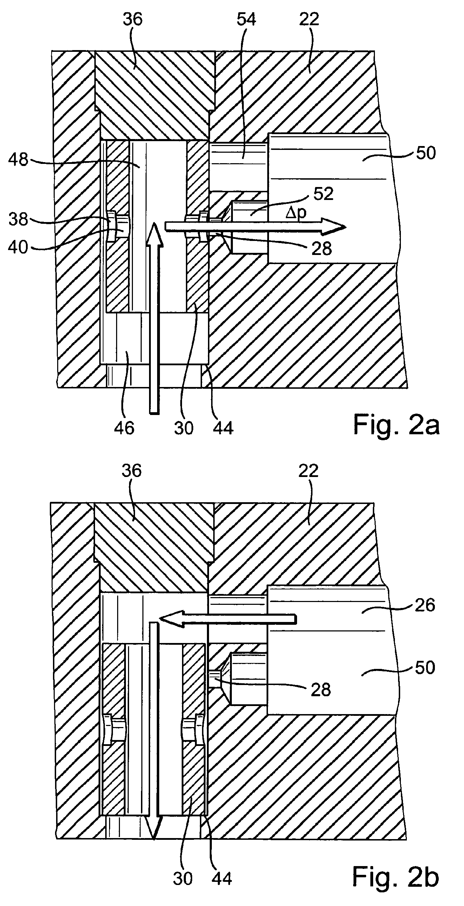

Zur Bevorratung des Druckmittels dient ein Druckmittelreservoir 34, das mit dem Geberzylinder 10 dann verbunden ist, wenn sich dieser in Ruhestellung befindet, d. h. , wenn auf die Nehmerzylindereinheit 12 kein Druck ausgeübt wird. In dieser Stellung kann Druckmittel in die Geberzylindereinhit 10 nach fließen. Bei Betätigung der Geberzylindereinheit 10 wird über ein nicht dargestelltes Ventil (z. B. Überfahren einer Schnüffelbohrung) das Druckmittelreservoir 34 von der Geberzylindereinheit 10 getrennt. In die hydraulische Strecke zwischen Geberzylindereinheit 10 und Nehmerzylindereinheit 12 ist eine Drosseleinrichtung 42 eingebaut, die zur richtungsabhängigen Beeinflussung der Strömungsgeschwindigkeit des Fluids dient. Diese Drosseleinrichtung 42 ist in de Figuren 2a und 2b in den beiden Endstellungen des Kuppelvorganges dargestellt.

Aus den Figuren 2a und 2b ist ersichtlich, dass die Drosseleinrichtung 42 im Wesentlichen aus einem Ventilkörper 30 besteht, der in die Bohrung 46 des Ablaufs zur Nehmerzylindereinheit 12 eingebaut ist. Die Bohrung 46 des Ablaufs zur Nehmerzylindereinheit 12 steht rechtwinklig mit der Bohrung 50 des Zulaufs zur Geberzylindereinheit 10 in Verbindung. Das von der Nehmerzylindereinheit 12 abweisende Ende der Bohrung 46 des Ablaufs zur Nehmerzylindereinheit 12 ist mit einem Stopfen 36 verschlossen. Dieser Stopfen 36 bildet gleichzeitig den Anschlag für den Ventilkörper 30 beim Einkuppelvorgang und der Absatz 44 in der Bohrung 46 des Ablaufs zur Nehmerzylindereinheit 12 den Anschlag beim Auskuppelvorgang. Die Länge des Ventilkörpers 30 überdeckt die rechtwinklig zur Bohrung des Ablaufs 46 abzweigende Bohrung 26 des Zulaufs zur Geberzylindereinheit 10. Der Außendurchmesser des Ventilkörpers 30 ist dem Durchmesser der Bohrung 40 angepasst. Der Ventilkörper 30 weist außerdem zwei Durchgangsbohrungen 40 und 48 auf, wobei die Durchgangsbohrung 48 parallel zur Bohrung 46 des Ablaufs zur Nehmerzylindereinheit 12 verläuft und die Durchgangsbohrung 40 rechtwinklig zu dieser angeordnet ist. Die Ausgänge dieser Durchgangsbohrung 40 enden in einer umlaufenden Nut 38.

Der rechtwinklig in den Ablauf zur Nehmerzylindereinheit 12 einmündende Zulauf zur Geberzylindereinheit 10 ist in zwei Durchlässe 52 und 54 unterteilt, wobei der Durchlass 52 angrenzend an der Bohrung 46 in Form einer Blende 28 ausgebildet ist.
Die Bewegung des Ventilkörpers 30 wird durch die beiden Anschläge 36 und 44 begrenzt. Je nach Stellung des Ventilkörpers 30 gibt dieser den Durchlass 54 frei oder überdeckt diesen. DA die Durchgangsbohrung 40 in dem Ventilkörper 30 so angeordnet ist, dass sie in einer Endstellung des Ventilkörpers 30 (Auskuppeln) mit der Blende 28 korrespondiert, ist somit in diese Stellung eine Verbindung zur Bohrung 50 des Zulaufs zur Geberzylindereinheit 10 hergestellt.

Figur 2a zeigt die Stellung des Ventilkörpers 30 beim Einkuppelvorgang. Bei diesem Vorgang wird der Ventilkörper 30 gegen den Stopfen 36 geschoben und vom Fluid umströmt. Außerdem strömt das Fluid durch die Bohrung 46 und über die Durchgangsbohrung 40 durch die Blende 28 in den Durchlass der Zulaufbohrung 26. Durch die Blende 28 wird in dieser Stellung ein Druckabfall δ P erzeugt. Durch diese Druckdifferenz δ P, die nur in einer Strömungsrichtung, nämlich zur Geberzylindereinheit 10 hinwirkt, wird der Ventilkörper 30 gegen die Wandung der Bohrung 46 gedrückt und dichtet somit vorhandene Spalten ab, die zu einer Leckage führen könnten.Die Strömungsrichtung und der Weg des Fluids werden durch die in den Figuren 2a und 2b dargestellten Pfeil angedeutet.

Die Öffnung der Blende ist in diesem Ausführungsbeispiel der erfindungsgemäßen Drosseleinrichtung in Strömungsrichtung zu dem Geberzylinder 10 hin erweitern ausgebildet.

In Figur 2b wird dargestellt, dass sich beim Auskuppeln die Position des Ventilkörpers 30 ändert, wobei jedoch kein wesentlicher Druckabfall erzeugt wird. Dies wird dadurch erreicht, dass beim Auskuppeln in Folge des in Richtung der Geberzylindereinheit 10 strömenden Fluids der Ventilkörper 30 gegen den Anschlag 44 geschoben wird. Dabei kann das Fluid durch den Durchlass der Zulaufbohrung 26 der Geberzylindereinheit 10 sowie durch die Durchgangsbohrung 48 des Ventilkörpers 30 ungehindert strömen, ohne einen Druckabfall zu verursachen.

Wenn während des Einkuppelvorgangs der Volumenstrom einen vorbestimmten Wert übersteigt, wird ein Druckabfall im Kontaktbereich Durchgangsbohrung 40/Blende 28 erreicht durch Verlagerung der Position des Ventilkörpers 30. In dieser Position kann nur noch die Blende 30 durchströmt werden, sodass ein maximaler Druckabfall erzeugt wird. Somit wirkt der Ventilkörper 30 als Schalter zwischen den beiden Durchlässen 52 und 54.

Während des Schaltvorgangs reduziert sich jedoch der Druckabfall temperaturabhängig aufgrund einer zusätzlichen Leckage-Stelle zwischen dem Außendurchmesser des Ventilkörpers 30 und der Bohrung 46 des Ablaufs zur Nehmerzylindereinheit 12.

### Bezugszeichenliste

- 10: Geberzylindereinheit
- 12: Nehmerzylindereinheit
- 14: Hydraulikleitung
- 16: Kupplung
- 18: Kupplungspedal/Betätigungsglied
- 20: Kolbenstange
- 22: Gehäuse des Geberzylinders
- 24: Kolben des Geberzylinders
- 26: Zulaufbohrung zum Geberzylinder
- 28: Blende
- 30: Ventilkörper
- 32: Brennkraftmaschine
- 34: Druckmittelreservoir
- 36: Stopfen
- 38: Umlaufende Nut
- 40: Durchgangsbohrung
- 42: Drosseleinrichtung
- 44: Absatz in Ablauf zur Nehmerzylindereinheit
- 46: Bohrung des Ablaufs zur Nehmerzylindereinheit
- 48: Durchgangsbohrung
- 50: Bohrung
- 52: Durchlass
- 54: Durchlass

## Patentansprüche

1. Drosseleinrichtung für ein hydraulisches Betätigungssystem, insbesondere zur Betätigung einer Fahrzeugkupplung, mit einem Ventilkörper (30), der eine Durchgangsbohrung (48) aufweist und zwischen zwei Anschlägen (36, 44) verschiebbar in einer Bohrung (46) des Ablaufs zur Nehmerzylindereinheit (129 angeordnet ist, die im Wesentlichen rechtwinklig zu einer Bohrung (26) des Zulaufs zur Geberzylindereinheit (10) verläuft **dadurch gekennzeichnet, dass** der Ventilkörper (30) quer zur Strömungsrichtung eine Durchgangsbohrung (40) aufweist, die abhängig vom Schaltvorgang mit einer Blende (28) im Durchlass (52) des Zulaufes zur Geberzylindereinheit (10) verbunden werden kann.

2. Drosseleinrichtung nach Anspruch 1 **dadurch gekennzeichnet, dass** die Enden der Durchgangsbohrung (40) des Ventilkörpers (30) von einer umlaufenden Nut (38) begrenzt werden.

3. Drosseleinrichtung nach Anspruch 1 **dadurch gekennzeichnet, dass** die Bewegung des Ventilkörpers (30) durch die beiden Anschläge (36, 44) in der Bohrung (46) des Ablaufs zur Nehmerzylindereinheit (12) begrenzt wird, wobei der Anschlag (36) gleichzeitig die Bohrung (46) endseitig verschließt.

4. Drosseleinrichtung nach Anspruch 1 **dadurch gekennzeichnet, dass** die Zulaufbohrung (26) zur Geberzylindereinheit (10) im Bereich zur Bohrung (46) des Ablaufs zur Nehmerzylindereinheit (12) in zwei Durchlässe (52, 54) mit unterschiedlichen Durchmessern unterteilt ist.

5. Drosseleinrichtung nach Anspruch 4, **dadurch gekennzeichnet, dass** der Durchlass (52) als Blende (28) ausgebildet ist, die sich in Richtung Geerzylindereinheit (10) erweitert.
